# EUROPEAN PATENT SPECIFICATION

(11) **EP 0 435 575 B1**
(45) Date of publication and mention of the grant of the patent: **09.10.1996**
(21) Application number: 90314008.5
(22) Date of filing: 20.12.1990
(51) Int. Cl.: G06K 15/02, G06K 15/10

(54) **Method for slanting a generic font format while inserting corrective pixels to improve print quality**
Verfahren zur Neigung eines generischen Schriftsatzformats mit gleichzeitiger Einfügung mildernder Pixels zur Verbesserung der Druckqualität
Procédé d'inclinaison d'un format de police de caractères générique et insertion conjointe de pixels correctifs en vue d'améliorer la qualité d'impression

(30) Priority: 27.12.1989 US 457498
(43) Date of publication of application: 03.07.1991
(73) Proprietor: XEROX CORPORATION, Rochester New York 14644 (US)
(72) Inventor: Markham, Roger, Webster New York, 14580 (US)
(74) Representative: Johnson, Reginald George

(56) References cited:
- EP-A- 0 150 038
- EP-A- 0 247 622
- FR-A- 2 254 190

## Description

The invention relates to a method of transforming a stored symbol into an "italic" symbol.

It is desirable to manufacture a printer which provides high quality text and graphics and moderate speed at a low cost. One factor increasing the cost of printers is the expense of storing many bits of font data, especially at resolutions needed for quality printing. Accordingly, a printer could be provided with sufficient font storage for storing a font in several different forms such as generic, italic or bold form to provide quality printing, but such a printer would be relatively expensive due to increased font storage needs. If sufficient processing power is available, the font storage needs can be reduced by storing one font in its generic form and altering it in as many ways as needed. Such alterations are usually restricted to slight modifications, such as bolding, compressing and expanding.

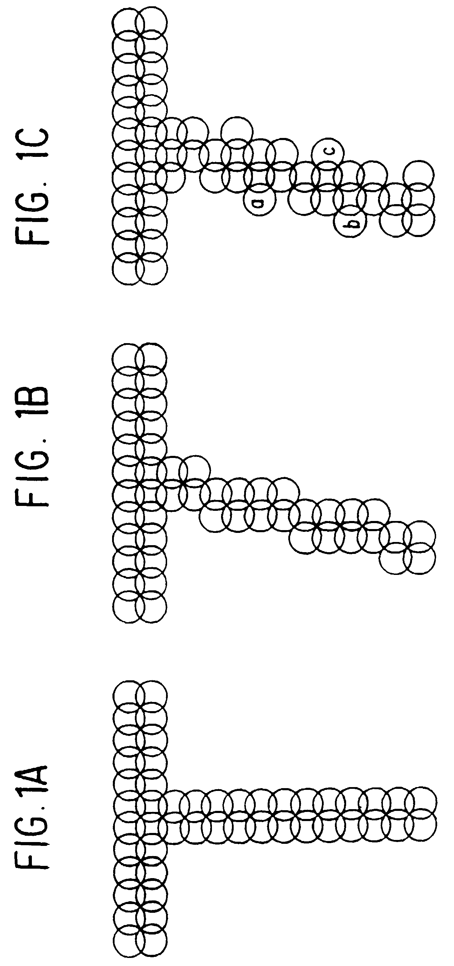

To "italicize" a font, it is possible to alter the generic font format (Figure 1A) by sloping the vertical pixels and leaving the horizontal pixels displaced but still horizontal. Typically, the slope is a horizontal displacement (or rightward displacement in Fig. 1A) of one pixel for a vertical rise of four pixels (Fig. 1B). This slope, however, leads to a staircase edge which reduces print quality at 300 spots per inch (spi). A font designer would partially hide the steps of the staircase edge by tediously adding pixels (such as "a", "b" and "c" in Fig. 1C) near the steps, but this insertion of step concealing pixels increases font storage and decreases printer speed due to relatively complex pixel placement programming requiring time consuming decisional steps to determine where to insert the step-concealing pixels. This counteracts any advantages obtained by a decrease in font storage and an increase in print quality due to the use of the font transformation. It is believed that the Hewlett- Packard Desk-Jet Plus has italic capability by font transformation but does not add the additional step concealing pixels.

It is an object of the invention to provide a method of "italicizing" a font which enables the foregoing disadvantages to be obviated.

The present invention provides a method for slanting a font comprising the steps of: storing a symbol in a generic font format of pixels in a font storage; adjusting an output memory pointer of a page storage at a position; selecting a byte of the font storage representing a group of pixels of a column of pixels for transformation; masking the byte of the font storage for placing first masked bits at the position of the output pointer in the page storage; masking the byte of the font storage for placing second masked bits at a position one stroke to the left from the position of the output pointer; masking the byte of the font storage for placing third masked bits at positions to the right from the position of the output pointer; moving the output pointer in the page storage a predetermined number of strokes to the right and one byte perpendicular in preparation for the transformation of a next higher byte in the column of the font storage; and repeating the transformation for a next column of pixels of the font storage.

By way of example, a method in accordance with the invention will be described with reference to the attached drawings wherein:
Figures 1A, 1B and 1C illustrate a symbol stored as a generic font, a slanted font, and a slanted font with step concealing pixels, respectively;
Figures 2A-2H illustrate processing steps in accordance with the invention operating on certain bytes of font storage to transform a generic font to a slanted font with step concealing pixels;
Figure 3 illustrates the output of the font transformation of the bytes illustrated in Figures 2A-2H;
Figure 4 is a table illustrating a copyrighted computer code for carrying out a preferred embodiment of the invention;
Figures 5A and 5B illustrate alignment of a bounding box in font storage (Fig. 5A) with an output page storage (Fig. 5B); and
Figures 6A-6C illustrate a byte value expressed in a hexadecimal system.

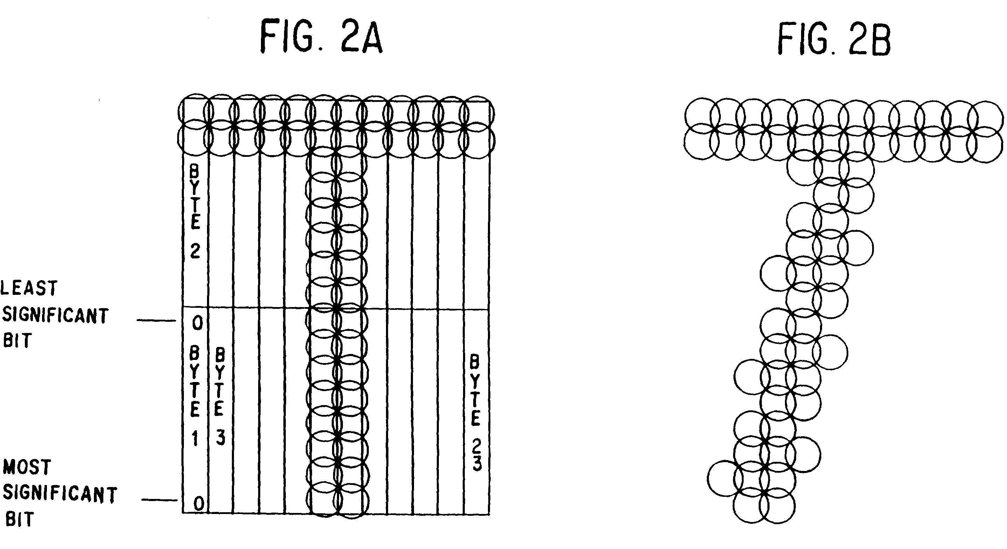

A method in accordance with the invention will be described below in terms of "italicizing" a symbol, such as a letter, number or other printed character. By "italicizing", it is meant that the generic form of a symbol (stored in a font as a collection of pixels) is altered by: 1) sloping the vertical pixels and leaving the horizontal pixel displaced but still horizontal; and 2) automatically inserting step-concealing pixels. The slope is preferably a rightward or positive displacement of one pixel for a vertical rise of four pixels, but other slopes are possible. Further, the method will be described with reference to altering the generic form of the upright capital letter "T" as illustrated in Fig. 2A to the italic form of Fig. 2B, but is equally applicable to other symbols and other non-upright generic forms.

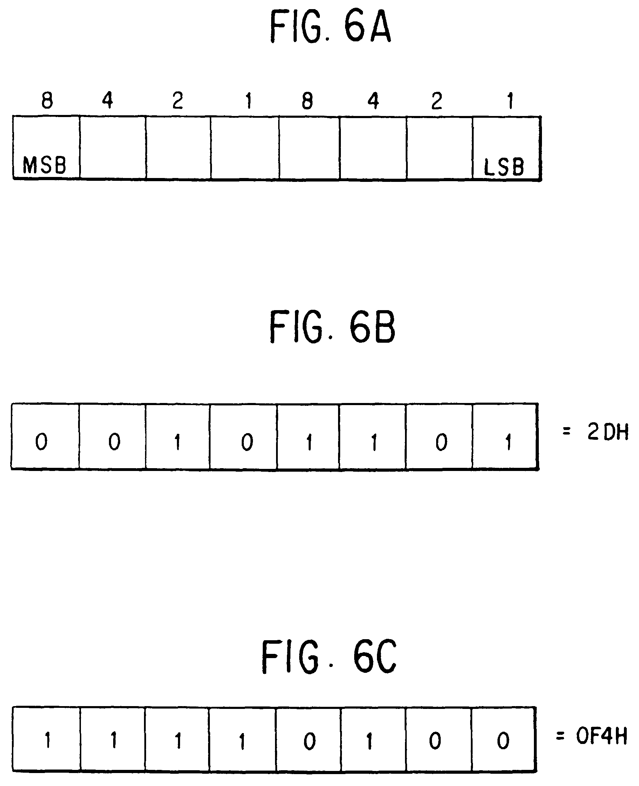

In addition, the method is described with reference to hexadecimal values known to those skilled in the art. Briefly, the hexadecimal system is a code for evaluating an 8 bit byte when the most significant bit and least significant bit are designated. For example, Figure 6A illustrates an 8 bit type with the left-most bit being the most significant bit MSB, and the right most bit being the least significant bit LSB. Each bit represents the decimal value above the corresponding bit. Values of 10- 15 are represented by the letters A-F: A(10), B(11), C(12), D(13), E(14) and F(15). If the bits are marked as in Fig. 6B, the value of the four most significant bits is 2 and the value of the least significant bits is 13 (8 + 4 + 1), which are represented in hexadecimal code as 2DH where 2 represents the decimal value of the four most significant bits, D represents the decimal value of 13 for the sum of the four least significant bits, and H represents the notation for the hexadecimal code. If the value of the most significant bits exceeds 9, it is also represented by one of the letters A-F, and the letter is preceded by a zero, e.g., OF4H meaning the value of the most significant bits is 15 (8 + 4 + 2 + 1) and the value of the least significant bits is 4, as illustrated in the byte of Fig. 6C.

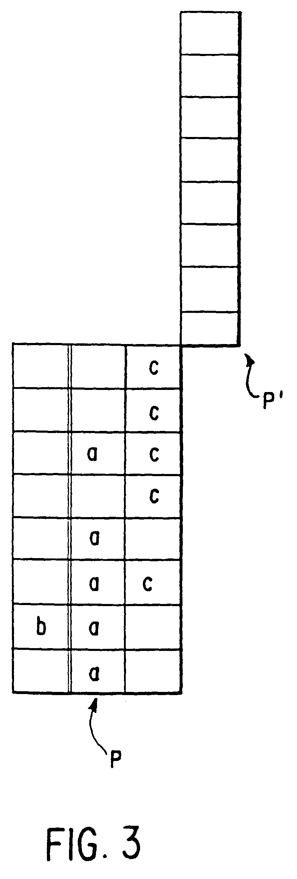

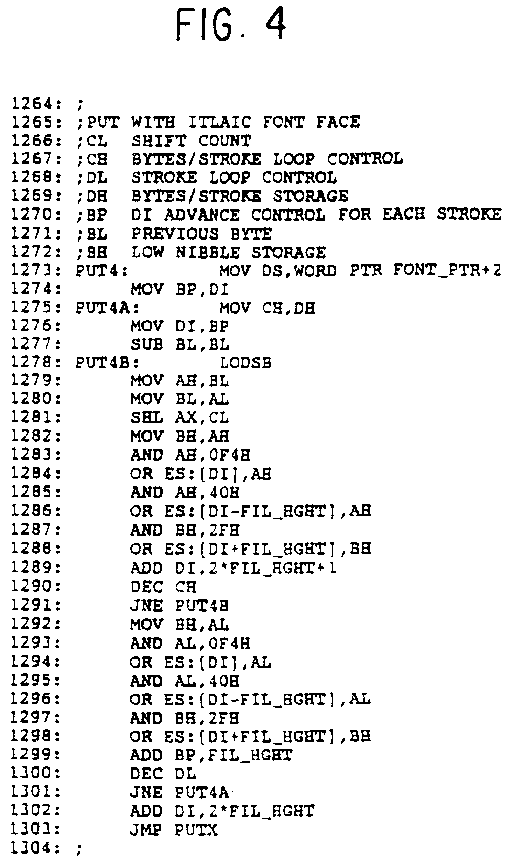

The method of italicizing a symbol will now be described with reference to the illustrations of Figures 2A-2 and 3, in conjunction with the code fragment of Figure 4 which is written in 80186 assembly language (Intel microprocessor) and which is subject to copyright protection. The method, however, can be expressed in other code formats.

In Fig. 2A, the capital letter "T" is stored in a bounding box which is the font storage for that particular symbol. The bounding box for this symbol includes 24 bytes, each byte containing eight bits. The bounding box defines a bit map which designates the most significant bit and the least significant bit of each byte. Certain of the bits in the bounding box are marked to represent a pixel. The collection of all marked bits represents the symbol stored in the bounding box.

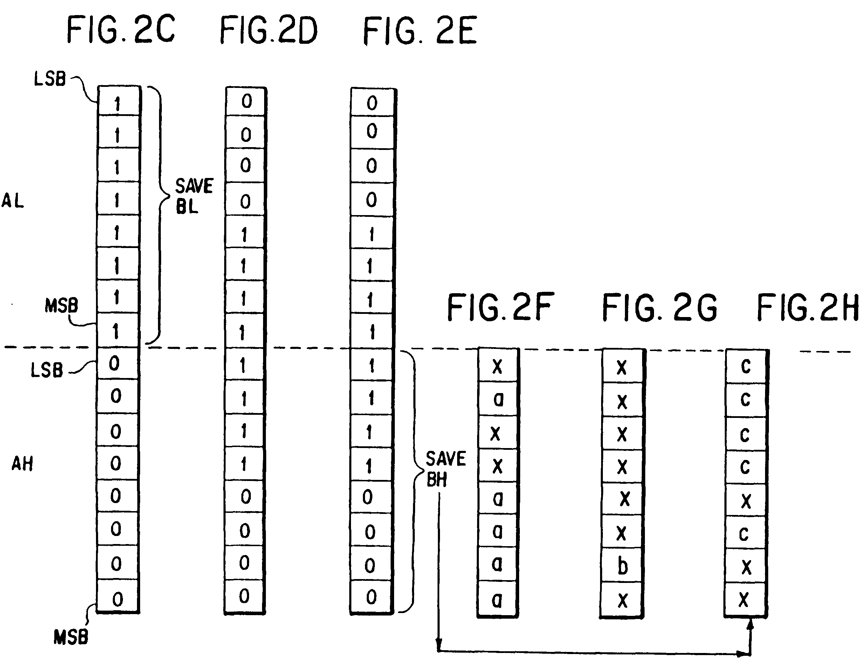

Each byte of the bounding box is examined in an iterative process described below:

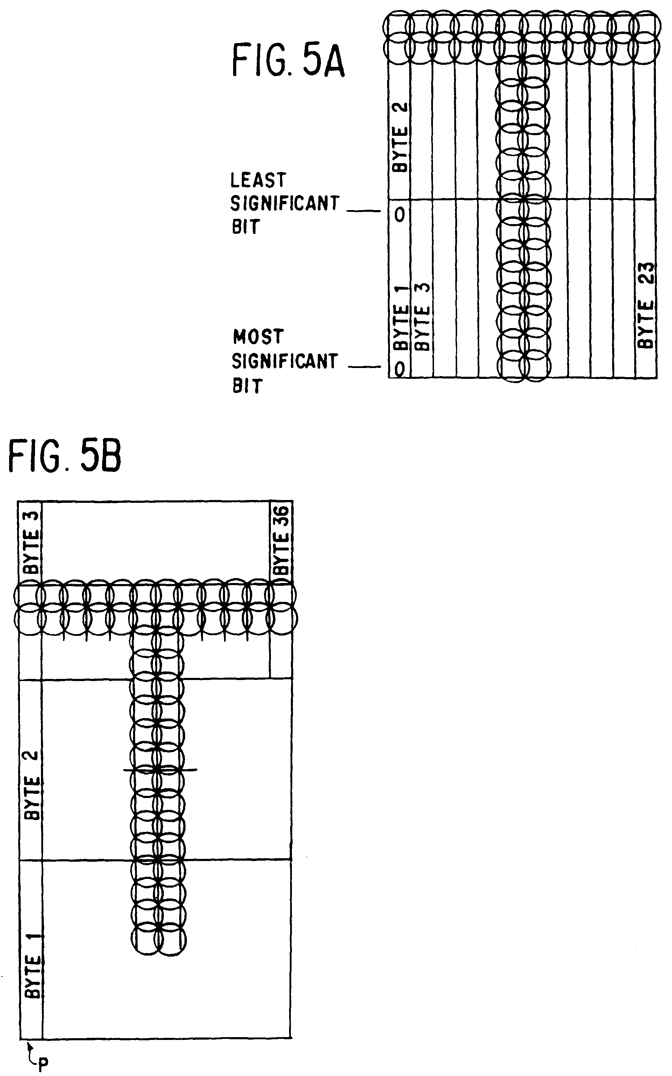

1. In Figure 2A, the vertical leg of the capital letter T ends at the byte boundary or base line. However, other symbols may have a descender, which is a portion of a symbol descending below the base line, for example, the lower case letters "g" or "p" Accordingly, the first step is a non-slanting transformation to adjust an output memory pointer in the storage for the output page to compensate for the slant which is to be introduced and vertical position of the particular symbol. In Figure 5B (which illustrates the output page image storage next to the bounding box of Fig. 2A), the output memory pointer is illustrated with arrow P to inform the process of the destination of the first byte in the bounding box on which the process starts, i.e., the pointer informs the process of where it started.
2.The position of the output memory pointer is saved (see step 1274 of Fig. 4).
3. Since each byte of the bounding box is examined in an iterative or looping process, the controls for the process must be restarted as the process enters the loop Accordingly, the third step entails restorage of the output memory pointer and loop control register (steps 1275 and 1276 in Fig. 4).
4. As illustrated in Figure 2C, the process obtains a current byte from the font storage of Figure 2A (step 1278 in Fig. 4) and forms a word (step 1279 in Fig. 4) by placing it in the low end register AL of a two byte register AX next to the previous font byte (from the previous cycle through the loop) in the high end register AH of the AX register. The previous font byte had been stored in the low end register BL of a last byte register BX. The current font byte is saved (step 1280 in Fig. 4) in the now available low end registered BL.
5. The boundary byte of the font storage may not coincide with the boundary byte in the page image storage. For example, Figure 5A illustrates the bonding box of Fig. 2A next to a page image storage of Figure 5B. The page image storage normally includes more bytes than the bounding box. As illustrated, the letter T in page image storage crosses a byte boundary. For an eight bit byte, there is only a one in eight chance that the symbol will end at a byte boundary in the page image storage. To align the symbol on the page image storage, the process shifts the word as illustrated in Figure 2D as necessary to generate the vertical position of the font (step 1281 in Fig. 4). The result of the shift is illustrated in Figure 2E. The high byte is saved for later operations (step 1282 in Fig. 4) in the high end register BH of the last byte register BX.
6. To provide a step concealing pixel while forming the pixel array for the symbol to be outputted, the shifted byte in the high end register AH of the AX register is masked as illustrated in Figure 2F to keep only the four most significant bits and the third least significant bit (step 1283 in Figure 4). In terms of the hexadecimal system, the high end register AH is masked with OF4H (refer to Fig. 6C) which results in the first, second and fourth least significant bits being blocked so as not to represent a pixel. The four most significant bits and the third least significant bit represent the pixels "a" The masked bits of Fig. 2F are then placed into output (Fig. 3) at the position of the current output memory pointer shown by arrow P in Fig. 3 (step 1284 in Figure 4).
7. The high end register AH of the register AX is then masked again in Figure 2G to keep the second most significant bit (step 1285 in Figure 4). In hexadecimal terms, the byte AH is masked with 40H so that only the second most significant bit represents a pixel "b" and the remaining bits are blocked. The masked byte of Fig. 2G is then placed in output (Fig 3) one stroke back from the position of the current memory point P (step 1286 in Fig. 4).
8. The high end register BH of the byte saved in the last byte register BX is then masked as in Figure 2H to keep the third most significant bit and the four least significant bits (see step 1287 in Fig. 4). In hexadecimal terms, the high end register BH of the last byte register BX is masked with 2FH so that the third most significant bit and the four least significant bits represent the pixels "c" and the remaining bits are blocked. The masked byte of Fig. 2H is then placed in output (Fig. 3) at the next stroke to the right of the output memory pointer P (step 1288 of Fig. 14).

It is noted that steps 6, 7 and 8 automatically insert the step concealing pixels "a", "b" and "c" at the appropriate predetermined locations of the symbol while simultaneously performing the operations for slanting the symbol. The insertion of the step concealing pixels is accomplished without expending font storage for the step concealing pixels, since the bytes existing for the generic font are masked to obtain the step-concealing pixels. That is, the process consumes no more storage space than that necessary to store the generic form of the symbol. The process also is accomplished relatively quickly since the process does not require any decisional steps to determine where the pixel should be located. That is, the process does not employ time-consuming steps which require recognition of the pattern or a decision regarding the need for additional pixels in the pattern.
9. The output memory pointer P in Fig. 3 is then advanced two strokes and one byte (step 1289 in Fig. 4), to the position of arrow P' in Figure 3, in preparation for the operations on the next byte.
10. The process then returns (step 1290 in Fig. 4) to step 4 outlined above (i.e., steps 1278-1280j in Fig. 4) and continues the process until the font stroke is exhausted (step 1291 in Figure 4).
11. The operations of steps 6, 7 and 8 are then repeated on the as yet unused byte in the low end register AL of the register AX illustrated in Fig. 2E (steps 1292- 1298 in Fig. 4), after the shift of step 5 (i.e., steps 1281-1282 of Fig. 4).
12. The saved memory pointer is then advanced to the next stroke (step 1299 in Fig. 4) and the process loops back to step 3 (i.e., steps 1275-1276 in Fig. 4) until there are no more font strokes (steps 1300-1301 in Fig. 4). The output memory pointer is then advanced to indicate the maximum region filled, and the process then exits (steps 1302-1303 in Fig. 4).

The method in accordance with the invention as described above with reference to the drawings eliminates complex pixel positioning programming that requires an analysis of the slanted pattern and a decisional process for recognizing whether a corrective pixel should be inserted at portions of the pattern. The predetermined transformation by which corrective pixels are inserted also does not substantially decrease the speed of the printing process. In addition, the method does not require the storage of additional pixel information relating to the symbol. Thus, the process decreases the cost of a high quality printer by not consuming more storage than necessary for storing the symbol in the generic form.

## Claims

1. A method for slanting a font comprising the steps of:
storing a symbol in a generic font format of pixels in a font storage;
adjusting an output memory pointer of a page storage at a position;
selecting a byte of the font storage representing a group of pixels of a column of pixels for transformation;
masking the byte of the font storage for placing first masked bits at the position of the output pointer in the page storage;
masking the byte of the font storage for placing second masked bits at a position one stroke to the left from the position of the pointer;
masking the byte of the font storage for placing third masked bits at positions to the right from the position of the output pointer;
moving the output pointer in the page storage a predetermined number of strokes to the right and one byte perpendicular in preparation for the transformation of a next higher byte in the column of the font storage; and
repeating the transformation for a next column of pixels of the font storage.

2. A method as claimed in claim 1, comprising the step of:
performing a non-slanting transformation to adjust an output memory pointer in the storage for the output page.

## Patentansprüche

1. Verfahren zum Schrägstellen einer Schrift, umfassend die Schritte:
Speichern eines Symbols in einem generischen Pixelschriftformat in einem Schriftspeicher;
Einstellen eines Ausgabespeicherzeigers eines Seitenspeichers auf eine Position;
Auswählen eines Bytes des Schriftspeichers, das eine Pixelgruppe einer Pixelspalte darstellt, zum Umwandeln;
Maskieren des Bytes des Schriftspeichers, um erste maskierte Bits an die Position des Ausgabezeigers in dem Seitenspeicher zu setzen;
Maskieren des Bytes des Schriftspeichers, um zweite maskierte Bits an eine Position einen Schlag links von der Position des Zeigers zu setzen;
Maskieren des Bytes des Schriftspeichers, um dritte maskierte Bits an Positionen rechts von der Position des Ausgabezeigers zu setzen;
Bewegen des Ausgabezeigers in dem Seitenspeicher eine vorbestimmte Anzahl von Schlägen nach rechts und ein Byte senkrecht als Vorbereitung für die Umwandlung eines nächsthöheren Bytes in der Spalte des Schriftspeichers und
Wiederholen der Umwandlung für eine nächste Pixelspalte des Schriftspeichers.

2. Verfahren nach Anspruch 1, umfassend den Schritt:
Durchführen einer nicht-schrägstellenden Umwandlung, um einen Ausgabespeicherzeiger im Speicher der Ausgabeseite einzustellen.

## Revendications

1. Procédé destiné à incliner une police comprenant les étapes consistant à :
mémoriser un symbole sous un format de pixels de police générique dans une mémoire de police,
ajuster un pointeur de mémoire de sortie d'une mémoire de page à une certaine position,
sélectionner un octet de la mémoire de police représentant un groupe de pixels d'une colonne de pixels pour la transformation,
masquer l'octet de la mémoire de police afin de placer des premiers bits masqués à la position du pointeur de sortie dans la mémoire de page,
masquer l'octet de la mémoire de police afin de placer des seconds bits masqués à une position décalée d'un pas vers la gauche par rapport à la position du pointeur,
masquer l'octet de la mémoire de police afin de placer des troisièmes bits masqués à des positions à la droite de la position du pointeur de sortie,
déplacer le pointeur de sortie dans la mémoire de page d'un nombre prédéterminé de pas vers la droite et d'un octet perpendiculaire pour préparer la transformation d'un octet plus élevé suivant dans la colonne de la mémoire de police, et
répéter la transformation pour une colonne suivante de pixels de la mémoire de police.

2. Procédé selon la revendication 1, comprenant l'étape consistant à :
réaliser une transformation sans inclinaison afin d'ajuster un pointeur de mémoire de sortie dans la mémoire pour la page de sortie.
